# EUROPEAN PATENT APPLICATION

(11) **EP 0 740 028 A1**
(43) Date of publication of application: **30.10.1996**
(21) Application number: 94903063.9
(22) Date of filing: 24.12.1993
(51) Int. Cl.: E04D 13/064

(54) **GUTTER OF FIBER-CONTAINING THERMOPLASTIC RESIN**

(71) Applicant: SEKISUI CHEMICAL CO., LTD., Osaka-shi, Osaka 530 (JP)
(72) Inventor: KARUKAYA, Koich, Moriyama-shi, Shiga 524 (JP); KONISHI, Takahiro, Kyoto-shi Kyoto 601 (JP)
(74) Representative: ter Meer, Nicolaus, Dipl.-Chem., Dr.
(86) International application number: JP9301884
(87) International publication number: WO9518279

(57) **Abstract**

This invention provides a gutter of fiber-thermoplastic resin composite material which is outstanding in weatherability and impact resistance and which is free of the likelihood of slipping off from a joint or deforming between joints. The gutter has a core layer comprising a thermoplastic resin and continuous reinforcing fibers arranged in parallel in the thermoplastic resin. An outer surface layer comprising a thermoplastic methacrylic resin and a thermoplastic elastomer dispersed therein is formed over the outer surface of the core layer. An inner surface layer comprising a vinyl chloride resin is provided over the inner surface of the core layer.

## Description

### TECHNICAL FIELD

The present invention relates to gutters of fiber-thermoplastic resin composite material which have a resin core layer reinforced with continuous fibers arranged in parallel in a thermoplastic resin.

### BACKGROUND ART

Conventional gutters are generally formed of a rigid vinyl chloride resin. However, gutters of vinyl chloride resin are great in coefficient of linear expansion, therefore undergo marked thermal expansion and contraction, and have the possibility that when attached to buildings along with joints, the gutter will slip off the joint, or bend to deform or break between joints owing to thermal expansion or contraction due to changes in atmospheric temperature during the four seasons or due to the temperature difference between the day and the night.

Accordingly, as disclosed in JP-A-138549/1980, gutters have been proposed which comprise a vinyl chloride core layer incorporating a large amount of filler, and an acrylic resin surface layer covering each of the inner and outer surfaces of the core layer.

When the conventional gutter falls during installation or is struck with a falling object, the surface layer fails to withstand the resulting impact and is likely to crack since the acrylic resin has low impact resistance. Further because the inner and outer surface layers are entirely made of the acrylic resin, the gutter requires at least twice the material cost of the vinyl chloride gutter and is expensive. Additionally, the vinyl chloride resin of the core layer thermally expands and contracts greatly, so that the gutter can not be prevented from slipping off from a joint or deforming and breaking between joints.

The present invention provides a gutter of fiber-thermoplastic resin composite material which is free of the problem of slipping off from the joint or deforming between joints, and is yet outstanding in weather resistance and impact resistance and inexpensive.

### DISCLOSURE OF THE INVENTION

The gutter made of a fiber-thermosplastic resin composite material and embodying the invention is characterized in that the gutter comprises a core layer comprising a thermoplastic resin and continuous reinforcing fibers arranged in parallel in the thermoplastic resin, an outer surface layer covering an outer surface of the core layer and comprising a thermoplastic methacrylic resin and a thermoplastic elastomer dispersed therein, and an inner surface layer covering an inner surface of the core layer and comprising a vinyl chloride resin.

The gutter of fiber-thermoplastic resin composite material according to the invention comprises a core layer comprising continuous reinforcing fibers arranged in parallel and mixed with a thermoplastic resin, therefore has a decreased coefficient of linear expansion and is unlikely to slip off the joint or deform and break between joints. The gutter has an outer surface layer of methacrylic resin, is accordingly excellent in weatherability and free of discoloration and deterioration, and moreover has high impact resistance and develops no crack in the surface layer because the methacrylic resin contains a thermoplastic elastomer dispersed therein. Further since a vinyl chloride resin forms the inner surface layer of which weatherability or impact resistance is not particularly required, the gutter is less costly than when both the inner and outer surface layers are made of the thermoplastic methacrylic resin having the thermoplastic elastomer dispersed therein. The gutter having the above excellent properties is obtained inexpensively.

An intermediate layer comprising a thermoplastic resin may be interposed between the core layer and at least one of the outer surface layer and the inner surface layer. Preferably, the thermoplastic resin of the intermediate layer comprises a vinyl chloride resin and a thermoplastic elastomer dispersed therein. Further preferably, a thermoplastic elastomer is dispersed in the vinyl chloride resin of the inner surface layer.

In the gutter described above, each of the inner and outer surface layers may comprise a methacrylic resin, and an intermediate layer comprising a thermoplastic resin may be interposed between the core layer and each of the surface layers.

The inner and outer surface layers each made of a methacrylic resin give the gutter good weatherability and eliminate the likelihood that the gutter will soften to expand outward at its opposite sides or discolor or deteriorate if used in a high-temperature environment involving, for example, direct exposure to sunlight. Further the intermediate layer comprising a thermoplastic resin and interposed between the core layer and each surface layer absorbs the difference between the core layer and the surface layer in linear expansion, obviating the likelihood of the surface layer separating off owing to thermal expansion or contraction.

It is desired that a thermoplastic elastomer, especially an acrylic elastomer, be dispersed in the thermoplastic resin of the intermediate layer. This gives enhanced adhesion between the intermediate layer and the surface layer, resulting in improved impact resistance.

In the case where the inner and outer surface layers each comprise the methacrylic resin, it is desirable that a thermoplastic elastomer be dispersed in the methacrylic resin of each surface layer.

Examples of useful kinds of continuous reinforcing fibers for the core layer are glass fiber, carbon fiber, alumina fiber, Aramid fiber, etc. which are used singly or in combination. Such fibers are used in the form of rovings, yarns or like continuous fibers, or a processed product such as fabric, swirl mat, continuous mat or net. The fibers in such a form can be used in combination with a nonwoven fabric or chopped strand mat to provide a multilayer structure.

To be suitable, the reinforcing fiber content of the core layer is 5 to 50 vol. %. If the content is less than 5 vol. %, the effect to reduce thermal expansion and contraction diminishes, whereas contents in excess of 50% present difficulty in shaping a sheet of reduced void ratio. The content of continuous reinforcing fibers in the gutter in its entirety is preferably 3 to 20 vol. % although dependent on the kind of fibers and the required properties.

Examples of thermoplastic resins useful for the core layer are vinyl chloride resin, vinyl chloride-vinyl acetate and like vinyl chloride copolymers, polyethylene, polypropylene, etc.

It is suitable that the outer surface layer comprising a thermoplastic methacrylic resin and an acrylic elastomer dispersed therein have a modulus of elasticity of 15,000 to 25,000 kgf/cm². Usually, an acrylic elastomer with a weight average molecular weight of 100,000 to 1,000,000 is dispersed in a methacrylic resin having a weight average molecular weight of 50,000 to 1,000,000 and a modulus of elasticity of 25,000 to 35,000 kgf/cm².

When required, a pigment, flatting agent, ultraviolet absorber, filler, etc. may be added to the methacrylic resin.

Typical of thermoplastic methacrylic resins (usually 50,000 to 1,000,000, preferably 90,000 to 500,000, in weight average molecular weight) for use in the outer surface layer only or in both the surface layers is polymethyl methacrylate, while other examples of such resins include polyisopropyl methacrylate and copolymer of methyl methacrylate and glycidyl methacrylate.

The thermoplastic elastomer to be dispersed in the methacrylic resin is a high-molecular-weight material which exhibits so-called rubber elasticity at room temperature and which becomes plasticized and is moldable by various methods at a high temperature. Such elastomers are classified, for example, into the acrylic type, polyurethane type, polystyrene type (styrene-butadiene-styrene, styrene-isoprene-styrene, styrene-ethylene-butadiene-styrene block copolymers), polyolefin type (ethylene-propylene rubber, ethylene-propylene-diene terpolymer), polyester type, polyvinyl chloride type, polyamide type, ionomer type, fluoro-rubber type, silicone rubber type, 1,2-polybutadiene type, trans-1,4-polyisoprene type, synthetic or natural rubber type, etc.

The acrylic elastomers desirable for use in the present invention are generally those obtained by copolymerizing ethyl acrylate, butyl acrylate or like alkyl acrylate serving as the main component with styrene, methyl methacrylate, ethylene, chloroethyl vinyl ether, acrylonitrile or the like, usually in a ratio of 60 to 90 wt. % of the former to 10 to 40 wt. % of the latter. More specific examples of such elastomers are the copolymer of ethyl acrylate and chloroethyl vinyl ether, copolymer of ethyl acrylate and acrylonitrile, copolymer of butyl acrylate and acrylonitrile, copolymer of ethyl acrylate and glycidyl methacrylate, copolymer of 2-chloroethyl acrylate and methyl acrylate, etc.

The outer surface layer contains as dispersed therein usually 1 to 60 wt. %, preferably 20 to 50 wt. %, of the thermoplastic elastomer, especially the acrylic elastomer. When the inner surface layer and the intermediate layer contains the thermoplastic elastomer, especially the acrylic elastomer, the elastomer content of these layers is usually 1 to 60 wt. %, preferably 5 to 30 wt. %. Suitable amounts of a stabilizer, lubricant, pigment, filler, etc. may be added to the acrylic elastomer.

Although the polymerization degree and the proportion of the vinyl chloride resin (polyvinyl chloride, chlorinated polyvinyl chloride, vinyl chloride-vinyl acetate copolymer, ethylene-vinyl acetate-vinyl chloride copolymer, acrylically modified polyvinyl chloride or the like) to be used in the inner surface layer are determined suitably, the preferred polymerization degree is about 500 to about 1,200 in view of the properties and extrudability.

Although the thermoplastic resin for use in the intermediate layer is not limited specifically, preferable to use are so-called general-purpose thermoplastic resins such as vinyl chloride resin, polyethylene, copolymer of ethylene and other monomer, polypropylene, polystyrene, acrylonitrile-styrene (AS) copolymer resin and acrylonitrile-butadiene-styrene (ABS) copolymer resin because these resins are inexpensive and have generally satisfactory properties.

If the adhesion between the core layer and the intermediate layer is low, it is desirable to form the intermediate layer by coating the surface of the core layer with an adhesive and thereafter covering the core layer with the thermoplastic resin by extrusion.

In the case where the gutter comprises three layers, i.e., a core layer, outer surface layer and inner surface layer, it is suitable that the core layer, outer surface layer and inner surface layer be 0.1 to 1 mm, 0.2 to 1 mm and 0.2 to 1 mm, respectively, in thickness. When the gutter comprises four layers, i.e., a core layer, outer surface layer, intermediate layer between the core layer and the outer surface layer, and inner surface layer, it is suitable that the core layer, outer surface layer, intermediate layer and inner surface layer be 0.1 to 1 mm, 0.1 to 0.7 mm, 0.1 to 0.5 mm and 0.2 to 1 mm, respectively, in thickness. When the gutter comprises five layers, i.e., a core layer, intermediate layers respectively between the core layer and an outer surface layer and between the core layer and an inner surface layer, outer surface layer and inner surface layer, it is suitable that the core layer, each of the intermediate layers and each of the surface layers be 0.1 to 1.0 mm, 0.1 to 0.5 mm and 0.1 to 0.7 mm, respectively, in thickness.

The gutter has a U-shaped or circular-arc cross section and formed with a hollow ear at each upper edge of its opposite side walls. It is suitable to produce the gutter, for example, by co-extrusion or lamination.

Throughout the specification, the term "inner surface layer" refers to a surface layer for catching rainwater and carrying it off in rainy weather, and the term "outer surface layer" refers to a surface layer opposite to the inner surface layer and including the hollow ears.

### BRIEF DESCRIPTION OF THE DRAWINGS

FIG. 1 is a perspective view in section of a gutter of fiber-thermoplastic resin composite material prepared in Example 1 of the invention;
FIG. 2 is a diagram in side elevation showing how to prepare a core sheet for use as the core layer of the gutter of FIG. 1, fluidizers only being shown in vertical section;
FIG. 3 is a diagram in side elevation showing how to produce the gutter of FIG. 1; and
FIG. 4 is a perspective view in section of a gutter of fiber-thermoplastic resin composite material prepared in Example 4 of the invention.

### BEST MODE OF CARRYING OUT THE INVENTION

Examples of the present invention will be described below with reference to the drawings. Comparative Examples are also given for comparison.

### Example 1

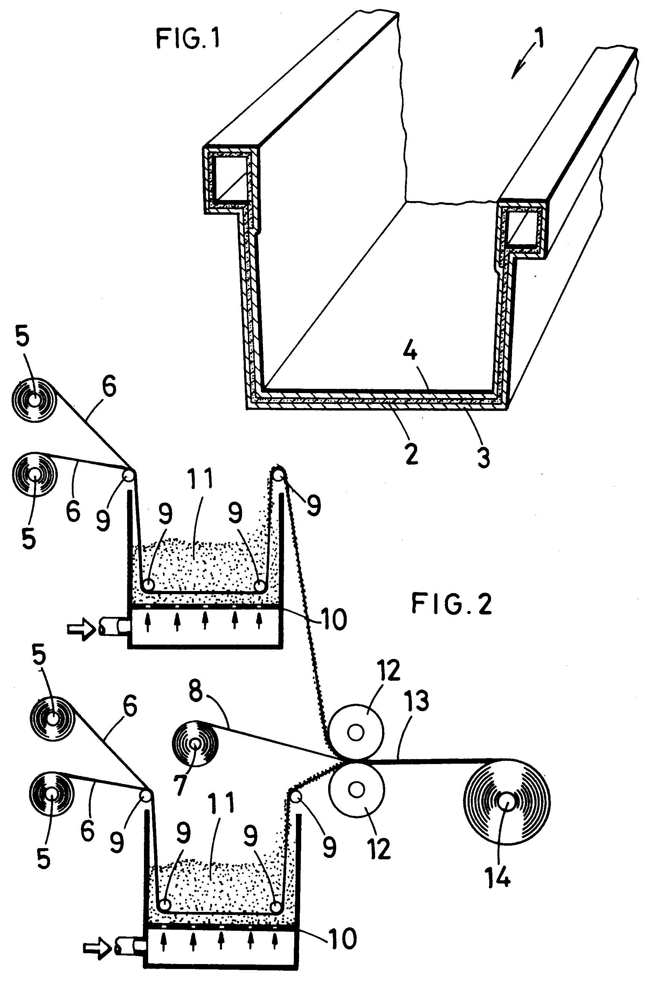

FIG. 1 shows a gutter 1 of fiber-thermoplastic resin composite material which comprises a core layer 2 comprising a thermoplastic resin and continuous reinforcing fibers arranged in parallel in the thermoplastic resin, an outer surface layer 3 covering the core layer 2 and comprising polymethyl methacrylate (PMMA) and an acrylic elastomer dispersed therein, and an inner surface layer 4 covering the inner surface of the core layer 2 and comprising a vinyl chloride resin.

Glass fibers were used as the reinforcing fibers of the core layer 2, and vinyl chloride-vinyl acetate copolymer was used as the thermoplastic resin.

The gutter was produced, for example, in the following manner.

With reference to FIG. 2, 28 glass rovings (product of Nitto Boseki Co., Ltd., brand name RS440RR-517FS, filament diameter 23 µm, 4440TEX, 4000 mono-filaments) 6 unwound from 28 bobbins 5 were first passed through upper and lower fluidizers 10, 14 rovings through each fluidizer, while being guided by a plurality of guide bars 9, the fluidizers 10 containing a composition 11 of powdery vinyl chloride-vinyl acetate copolymer resin (product of Shin-Etsu Chemical Co., Ltd., brand name MA800S, polymerization degree 780, vinyl acetate content 7 wt. %, average particle size 100 µm) as suspended by air supplied through a bottom plate (at a rate of 50 liters/sec), whereby the resin was caused to penetrate into the interstices between the fibers and adhere thereto while the rovings were being opened. The resulting layers of rovings were thereafter passed between a pair of heating-pressing rolls 12 having a surface temperature of 200^{o} C while sandwiching between the layers glass cloth (product of Nitto Boseki Co., Ltd., brand name WK2015 D102VCL, 54 g/m² (longitudinal continuous fibers 27 g/m²)) 8 unwound from an unwinding roll 7 disposed between the upper and lower fluidizers 10, whereby the resin was heated and melted to impregnate the fibers and fuse thereto, giving a core sheet 13 having a width of 500 mm, a thickness of 0.5 mm and a glass content of 20 vol. %. The sheet was wound up on a take-up roll 14.

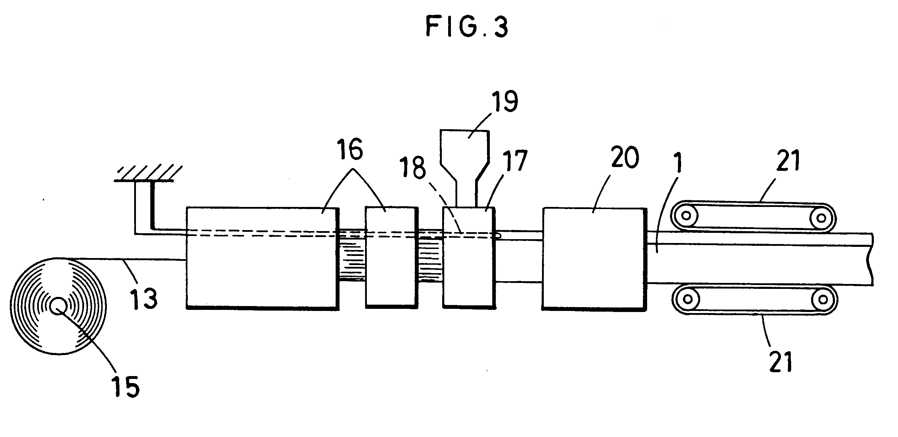

With reference to FIG. 3, the core sheet 13 thus prepared was transferred onto an unwinding roll 15 and formed to a specified shape of gutter by a forming device 16 while being paid off from the roll 15. The side upper portions of the formed sheet were thereafter gradually wound respectively around a pair of horizontal mandrels 18 arranged in parallel as spaced apart by a predetermined distance and extending from a position a short distance before the inlet of the forming device 16 to a position slightly beyond a crosshead die 17 ahead of the device 16, whereby hollow portions of rectangular cross section for providing the core layers of hollow ears of the gutter at its opposite sides were formed to obtain a troughlike core.

The troughlike core was inserted into the crosshead die 17 attached to an extruder 19, with its hollow portions further guided by the respective horizontal mandrels 18, and subjected to a co-extrusion process, whereby the inner surface of the core was covered to a thickness of 0.5 mm with a vinyl chloride resin incorporating an Sn-type stabilizer, etc., having a polymerization degree of 800 and extruded on melting at 185^{o} C, and the outer surface of the core was covered to a thickness of 0.5 mm with a methacrylic resin extruded on melting. The methacrylic resin was a composition of copolymer of 90 wt. % of methyl methacrylate (MMA) and 10 wt. % of butyl acrylate (the composition being a product of Sumika Haas Co., Ltd., brand name HFI-10, flexural modulus 18,000 kgf/cm², flexural strength 700 kgf/cm², weight average molecular weight of the copolymer consisting mainly of MMA about 100,000) having dispersed therein 40 wt. % of a polybutyl acrylate elastomer (crosslinked polymer having a gel fraction of 10% as determined with use of acetone) 0.01 to 0.8 µm in particle size and obtained by polymerizing a mixture of 100 parts by weight of butyl acrylate, 50 parts by weight of MMA monomer and up to 1 part by weight of crosslinking agent. Finally the core covered with the extruded resins was passed through a sizing device 20 disposed in front of the die, had its covering smooth-surfaced, cooled for solidification at the same time, and led out by a take-off 21, whereby the gutter 1 was obtained with a thickness of 1.5 mm. The glass fiber content of the entire gutter 1 was 7 vol. %.

### Example 2

Prepared in this example was a gutter of fiber-thermoplastic resin composite material which had a 0.3-mm-thick intermediate layer between the core layer 2 and the outer surface layer 3 of the gutter of Example 1. The intermediate layer was prepared from a composition comprising 100 parts by weight of a vinyl chloride resin having a polymerization degree of 800, 5 phr of a copolymer (product of Kanegafuchi Chemical Industry Co., Ltd., brand name Kane Ace-FM, weight average molecular weight 150,000) of 70 parts by weight of butyl acrylate and 30 parts by weight of MMA, Sn-type stabilizer, lubricant and 30 phr of a copolymer (product of Mitsubishi Rayon Co., Ltd., brand name H-632) of 100 parts by weight of MMA and 15 parts by weight of phenylmaleimide. The outer surface layer 3 and the inner surface layer 4 were 0.2 mm and 0.5 mm in thickness, respectively.

### Example 3

The gutter of fiber-thermoplastic resin composite material of this example was the same as that of Example 2 except that the inner surface layer was prepared from 100 phr of vinyl chloride resin having a polymerization degree of 800, and 30 phr of the above-mentioned H-632 and 5 phr of Kane Ace FM mixed therewith.

### Comparative Example 1

The gutter of fiber-thermoplastic resin composite material of this comparative example was the same as that of Example 1 except that the outer surface layer was prepared from vinyl chloride resin.

### Comparative Example 2

The gutter of fiber-thermoplastic resin composite material of this comparative example was the same as that of Example 1 except that the outer surface layer was prepared from a copolymer (product of Sumika Haas Co., Ltd., brand name MHO, flexural modulus 33,000 kgf/cm², flexural strength 1,200 kgf/cm²) of 90 parts by weight of MMA and 10 parts by weight of butyl acrylate, with a weight average molecular weight of 100,000.

### Example 4

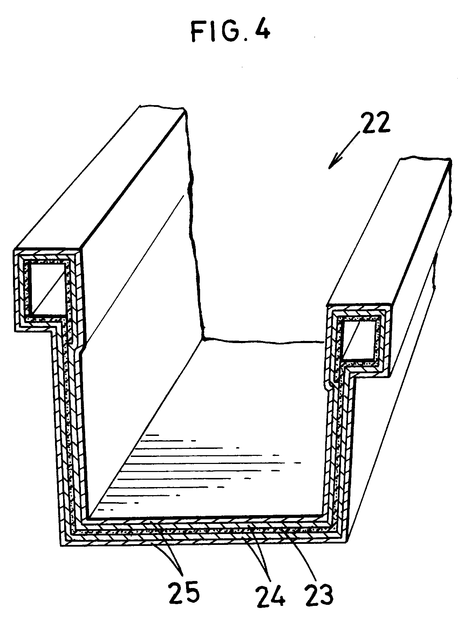

FIG. 4 shows a gutter 22 of fiber-thermoplastic resin composite material which comprises a core layer 23 comprising a thermoplastic resin and continuous reinforcing fibers arranged in parallel in the thermoplastic resin, a thermoplastic resin intermediate layer 24 covering each of the inner and outer surfaces of the core layer 23, and a methacrylic resin surface layer covering the surface of the intermediate layer 24.

Glass fibers were used as the reinforcing fibers of the core layer 23, and vinyl chloride-vinyl acetate copolymer was used as the thermoplastic resin thereof. A vinyl chloride resin composition having an average polymerization degree of 800 was used as the thermoplastic resin of the intermediate alyers 24. Methyl methacrylate resin (PMMA) was used as the methacrylic resin for the surface layers 25.

The gutter was produced in the following manner. A troughlike core was prepared by the same method as used for producing the gutter of Example 1, then inserted into a crosshead die and covered over all the peripheral surfaces thereof with a vinyl chloride resin composition to a thickness of 0.3 mm by melting and extruding the composition at 185^{o} C. The resin composition was a mixture of suitable amounts of a vinyl chloride resin and others, i.e., a stabilizer, lubricant, filler, etc. The resulting covering was then covered over all the peripheral surfaces thereof with rigid PMMA (above-mentioned MHO) to a thickness of 0.2 mm by melting and extruding the rigid resin. The core thus covered was finally passed through a sizing device disposed in front of the die, had its covering smooth-surfaced, cooled in a vacuum for solidification at the same time, and drawn off by a take-off, whereby a gutter was obtained with a thickness of 1.5 mm.

### Example 5

The gutter of fiber-thermoplastic resin composite material of this example was the same as that of Example 4 except that the intermediate layers were made from 100 parts by weight of vinyl chloride and 5 parts by weight of the above-mentioned Kane Ace-FM.

### Example 6

The gutter of fiber-thermoplastic resin composite material of this example was the same as that of Example 4 except that the surface layers were made from HFI-10.

### Example 7

The gutter of fiber-thermoplastic resin composite material of this example was the same as that of Example 5 except that the surface layers were prepared from HFI-10.

### Comparative Example 3

The gutter of fiber-thermoplastic resin composite material of this comparative example was the same as that of Example 4 except that no core layer was present (0.2-mm-thick surface layers of PMMA, overall thickness 1.5 mm).

In preparing the core sheet 13 in the foregoing examples, the glass rovings were guided into the fluidizer 11 for them to capture the powder resin, whereas the rovings can alternatively be led into a powder resin layer which is not fluidized but merely retains particles of resin, or into an impregnation tank containing a resin as dispersed in an aqueous dispersing liquid for capturing the resin.

The properties of the gutters of the examples were evaluated with the results given in the table below.

### (1) Measurement of coefficient of linear expansion

The gutter was cut to a length of 4 m, then allowed to stand in an oven (30^{o} C to 70^{o} C) for 1 hour and thereafter checked for length. The value was divided by the temperature and the original length to obtain a quotient, which was taken as the coefficient of linear expansion.

### (2) Evaluation of heat resistance

The gutter of each example was cut to a length of 4 m, and a joint was attached to the length of gutter in the same manner as in installation to obtain a test piece. The test piece was allowed to stand in an oven at 80^{o} C for 5 hours and thereafter checked for deformation.

### (3) Evaluation of impact resistance (Du Pont impact test)

A plate sample cut out from the gutter of each example and measuring 20 mm in width and 20 mm in length was placed on a fixed table having a circular recess of 1/4 inch in diameter, and a weight with a 1/8-inch circular projection was allowed to fall onto the sample from suitable heights. The height resulting in a failure probability of 50% was taken as the value of impact strength (n = 50, 0^{o} C, weight 1.5 kg).

### (4) Evaluation of weatherability

Evaluated in terms of ΔE value of color difference measurement by the accelerated weathering test for plastics building materials (according to JIS A1415, WS type with use of a sunshine weathering tester).

### (5) Evaluation by bending test

Test pieces, 20 mm in width and 100 mm in length, were cut out from the gutter of each example and tested for flexural strength and flexural modulus according to JIS K7203 at a bending span of 50 mm and crosshead speed of 5 mm/min.

| | Coefficient of linear expansion | Heat resistance | Impact resistance (cm) | Weatherability (3000 hr, ΔE value) | Longitudinal flexural strength (kgf/mm²) | Longitudinal flexural modulus (kgf/mm²) |
|---|---|---|---|---|---|---|
| Example 1 | 3.0x10^{- 5}/^{o}C | Not deformed | 35 | Up to 5* | 7.5 | 350 |
| Example 2 | 3.0x10^{- 5}/^{o}C | Not deformed | 45 | Up to 5 | 7.0 | 318 |
| Example 3 | 3.0x10^{- 5}/^{o}C | Not deformed | 50 | Up to 5 | 6.8 | 320 |
| Comp. Ex. 1 | 3.0x10^{- 5}/^{o}C | Out of shape | 35 | 30 | 7.8 | 330 |
| Comp. Ex. 2 | 3.0x10^{- 5}/^{o}C | Not deformed | 15 | Up to 5 | 10.2 | 450 |
| Example 4 | 3.0x10^{- 5}/^{o}C | Not deformed | 30 | Up to 5 | 8.2 | 370 |
| Example | 3.0x10^{- 5}/^{o}C | Not deformed | 45 | Up to 5 | 7.2 | 330 |
| Example | 3.0x10^{- 5}/^{o}C | Not deformed | 45 | Up to 5 | 7.0 | 325 |
| Example | 3.0x10^{- 5}/^{o}C | Not deformed | 50 | Up to 5 | 6.6 | 300 |
| Comp. Ex. 3 | 7.0x10^{- 5}/^{o}C | Bent, zigzagged | 30 | Up to 5 | 8.1 | 375 |

| | | | | | | |
|---|---|---|---|---|---|---|
| * The change up to 5 in ΔE value for 3000 hr. is generally indiscernible visually. | | | | | | |

### INDUSTRIAL APPLICABILITY

The gutter of fiber-thermoplastic resin composite material according to the invention is useful for buildings and the like especially for use at locations where weatherability is required.

## Claims

1. A gutter made of a fiber-thermoplastic resin composite material, characterized in that the gutter comprises a core layer comprising a thermoplastic resin and continuous reinforcing fibers arranged in parallel in the thermoplastic resin, an outer surface layer covering an outer surface of the core layer and comprising a thermoplastic methacrylic resin and a thermoplastic elastomer dispersed therein, and an inner surface layer covering an inner surface of the core layer and comprising a vinyl chloride resin.

2. A gutter made of a fiber-thermoplastic resin composite material as defined in claim 1 which is characterized in that the content of the continuous reinforcing fibers in the entire gutter is 3 to 20 vol. %.

3. A gutter made of a fiber-thermoplastic resin composite material as defined in claim 1 which is characterized in that the thermoplastic elastomer is an acrylic elastomer.

4. A gutter made of a fiber-thermoplastic resin composite material as defined in claim 3 which is characterized in that the content of the acrylic elastomer in the outer surface layer is 1 to 60 wt. %.

5. A gutter made of a fiber-thermoplastic resin composite material as defined in claim 3 which is characterized in that the acrylic elastomer in the outer surface layer is a copolymer of butyl acrylate and methyl methacrylate.

6. A gutter made of a fiber-thermoplastic resin composite material as defined in claim 1 which is characterized in that the core layer, the outer surface layer and the inner surface layer are 0.1 to 1 mm, 0.2 to 1 mm and 0.2 to 1 mm, respectively, in thickness.

7. A gutter made of a fiber-thermoplastic resin composite material as defined in claim 1 which is characterized in that an intermediate layer comprising a thermoplastic resin is interposed between the core layer and the outer surface layer.

8. A gutter made of a fiber-thermoplastic resin composite material as defined in claim 7 which is characterized in that the thermoplastic resin of the intermediate layer comprises a vinyl chloride resin and a thermoplastic elastomer dispersed in therein.

9. A gutter made of a fiber-thermoplastic resin composite material, characterized in that the gutter comprises a core layer comprising a thermoplastic resin and continuous reinforcing fibers arranged in parallel in the thermosplastic resin, an intermediate layer covering an outer surface of the core layer and comprising a vinyl chloride resin and a thermoplastic elastomer dispersed therein, an outer surface layer covering an outer surface of the intermediate layer and comprising a thermoplastic mechacrylic resin and a thermoplastic elastomer dispersed therein, and an inner surface layer covering an inner surface of the core layer and comprising a vinyl chloride resin and a thermoplastic elastomer dispersed therein.

10. A gutter made of a fiber-thermoplastic resin composite material as defined in claim 9 which is characterized in that each of the thermoplastic elastomers in the outer surface layer, the intermediate layer and the inner surface layer is an acrylic elastomer.

11. A gutter made of a fiber-thermoplastic resin composite material as defined in claim 10 which is characterized in that the content of the acrylic elastomer in each of the outer surface layer, the intermediate layer and the inner surface layer is 1 to 60 wt. %.

12. A gutter made of a fiber-thermoplastic resin composite material as defined in claim 10 which is characterized in that the acrylic elastomer in each of the outer surface layer, the intermediate layer and the inner surface layer is a copolymer of butyl acrylate and methyl methacrylate.

13. A gutter made of a fiber-thermoplastic resin composite material as defined in claim 9 which is characterized in that the core layer, the outer surface layer, the intermediate layer and the inner surface layer are 0.1 to 1 mm, 0.1 to 0.7 mm, 0.1 to 0.5 mm and 0.1 to 0.7 mm, respectively, in thickness.

14. A gutter made of a fiber-thermoplastic resin composite material, characterized in that the gutter comprises a core layer comprising a thermoplastic resin and continuous reinforcing fibers arranged in parallel in the thermoplastic resin, an intermediate layer comprising a thermoplastic resin and covering each of inner and outer surfaces of the core layer, and a surface layer comprising a thermoplastic methacrylic resin and covering a surface of the intermediate layer.

15. A gutter made of a fiber-thermoplastic resin composite material as defined in claim 14 which is characterized in that an acrylic elastomer is dispersed in the thermoplastic resin of the intermediate layer.

16. A gutter made of a fiber-thermoplastic resin composite material as defined in claim 14 which is characterized in that an acrylic elastomer is dispersed in the methacrylic resin of the surface layer.

17. A gutter made of a fiber-thermoplastic resin composite material as defined in claim 14 which is characterized in that an acrylic elastomer is dispersed in the thermoplastic resin of the intermediate layer, an acrylic elastomer being dispersed in the methacrylic resin of the surface layer.

18. A gutter made of a fiber-thermoplastic resin composite material as defined in claim 1, 9 or 14 which is characterized in that the thermoplastic resin of the core layer is a vinyl chloride-vinyl acetate copolymer.
